(19) Europäisches Patentamt
European Patent Office
Office européen des brevets

(11) **EP 1 276 626 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**13.06.2012 Patentblatt 2012/24**

(45) Hinweis auf die Patenterteilung:
**05.03.2008 Patentblatt 2008/10**

(21) Anmeldenummer: **01927602.1**

(22) Anmeldetag: **24.03.2001**

(51) Int Cl.:
***B60W 30/16*** *(2012.01)*    *B60K 31/00* *(2006.01)*

(86) Internationale Anmeldenummer:
**PCT/DE2001/001150**

(87) Internationale Veröffentlichungsnummer:
**WO 2001/079013 (25.10.2001 Gazette 2001/43)**

(54) **ABSTANDSBEZOGENES VERFAHREN ZUR REGELUNG DER GESCHWINDIGKEIT EINES FAHRZEUGS**

DISTANCE-RELATED METHOD FOR CONTROLLING THE SPEED OF A VEHICLE

PROCEDE DE REGULATION DE LA VITESSE D'UN VEHICULE EN FONCTION DE LA DISTANCE

(84) Benannte Vertragsstaaten:
**DE FR IT**

(30) Priorität: **14.04.2000 DE 10018558**

(43) Veröffentlichungstag der Anmeldung:
**22.01.2003 Patentblatt 2003/04**

(73) Patentinhaber: **ROBERT BOSCH GMBH**
**70442 Stuttgart (DE)**

(72) Erfinder:
• **LUEDER, Jens**
**70806 Kornwestheim (DE)**
• **UHLER, Werner**
**76646 Bruchsal (DE)**
• **WINNER, Hermann**
**76467 Bietigheim (DE)**

(56) Entgegenhaltungen:
EP-A- 0 657 857      EP-A- 1 060 937
EP-A2- 0 775 919     WO-A1-00/33151
DE-C- 19 722 947     US-A- 5 467 283
US-A- 5 745 870

EP 1 276 626 B2

**Beschreibung**

Stand der Technik

Die Erfindung betrifft ein Verfahren zur Regelung der Geschwindigkeit eines Fahrzeuges, insbesondere unter Einbeziehung von vorausfahrenden Fahrzeugen, nach dem Oberbegriff des Hauptanspruchs.

Es ist aus der DE 42 42 700 A1 bekannt, dass ein Radar- oder Infrarotsensor zur Erfassung der vorausfahrenden Fahrzeuge an einem Fahrzeug angebracht ist. Dieser Radarsensor ist z.B. ein Baustein eines Fahrzeugkomfortsystems ACC (Adaptiv Cruise Control), bei dem ständig Informationen über den Abstand und die Relativgeschwindigkeit des Fahrzeuges zu anderen Fahrzeugen und zu den Straßengegebenheiten verarbeitet werden.

Die Grundfunktionen des oben beschriebenen Systems betreffen die Regelung der Fahrgeschwindigkeit entweder auf eine Sollgröße, hier die Wunschgeschwindigkeit, oder auf die Geschwindigkeit eines vorausfahrenden Fahrzeugs; falls dieses langsamer als die Wunschgeschwindigkeit fährt und sich dieses im Detektionsbereich des Radarsensors befindet. Dieser Sensor kann beispielsweise, wie oben erwähnt, Bestandteil eines Mikrowellenradars oder eines Infrarotlidars sein und misst dazu den Abstand, die Relativgeschwindigkeit und den Winkel von Objekten, insbesondere von vorausfahrenden Fahrzeugen innerhalb des Detektionsbereichs.

Aus der DE 197 22 947 C1 (Nächstliegenden Stand der Technik) ist ein Verfahren bekannt, bei dem zusätzlich zur Messung der zuvor beschriebenen Größen auch der zukünftige Kursverlauf des Fahrzeuges mit dem ACC-System in die Regelung mit einbezogen wird. Hierzu wird der zukünftige Kursbereich wenigstens eines vorausfahrenden Fahrzeuges bestimmt und dann zu allen detektierten Fahrzeugen ein seitlicher Querversatz ermittelt. Der zukünftige Fahrkorridor bestimmen. Bei stationären Krümmungsverhältnissen der Fahrbahn, d.h. in einem Geradenstück oder im Bereich der konstanten Krümmung einer Kurve, lässt sich beim bekannten Verfahren auch leicht mit Hilfe eines gut abgeglichenen Gier- oder Drehratensignals der zukünftige Fahrkorridor bestimmen.

Aus der Gierrate des ACC-Fahrzeugs kann hier mit an sich bekannten Verfahrensschritten die Krümmung der Fahrbahn und damit auch der Kursversatz eines vorausfahrenden Fahrzeugs bestimmt werden. Ist dieser Kursversatz betragsmäßig kleiner als eine vorbestimmte Breite des Fahrkorridors, dann kann darauf geschlossen werden, daß das vorausfahrenden Fahrzeug sich im Fahrkorridor des ACC-Fahrzeugs befindet. Bei sich ändernden Verhältnissen, insbesondere im Kurveneingangsbereich, kann jedoch in der Regel die Zugehörigkeit zum Fahrkorridor nicht mehr richtig bestimmt werden, so dass ein auf der rechten Nachbarspur vorausfahrendes Fahrzeug bei einer beginnenden Linkskurve fälschlicherweise zum Fahrkorridor gerechnet werden kann. Dies führt zu störenden Regelreaktionen, wobei die Ursache hier die fehlende Prädiktion der Krümmung ist, da die ermittelte Krümmung immer auf den aktuellen Zeitpunkt bezogen ist und damit zu spät eine Krümmungsänderung reagiert wird.

In der nächstliegenden EP A2 0 775 919 wird eine Krümmungskorrektur einer Fahrzeugtrajektorie abhängig von den tiefpassgefilterten Positionsänderungen vorausfahrender Fahrzeuge vorgeschlagen.

Vorteile der Erfindung

Ein Verfahren zur Regelung der Geschwindigkeit eines Fahrzeuges der eingangs genannten Art, bei dem im zu regelnden Fahrzeug die Gier- oder Drehrate, insbesondere zur Ermittlung der Krümmung der eigenen Fahrtrajektorie, erfasst wird und bei dem mit einem Abstands- oder Positionssensor mindestens ein vorausfahrendes Fahrzeug oder mindestens ein sonstiges Objekt innerhalb eines Sensorerfassungsbereichs, insbesondere hinsichtlich eines Versatzes vom Kurs des zu regelnden Fahrzeugs, detektiert wird, wird erfindungsgemäß mit den kennzeichnenden Merkmalen des Hauptanspruch in vorteilhafter Weise weitergebildet.

Wie schon eingangs erwähnt, kann auf einfache Weise aus der gemessenen Gierrate des zu regelnden ACC-Fahrzeugs mit an sich bekannten Verfahrensschritten die Krümmung k der Fahrbahn, indem die Gierrate durch die Geschwindigkeit geteilt wird, errechnet und damit auch der Kursversatz yc eines vorausfahrenden Fahrzeugs bestimmt werden. Im einzelnen kann der Kursversatz yc nach folgender Formel bestimmt werden:

$$yc = yv - k*d^2/2,$$

wobei die Größe yv der gemessene Querversatz ohne Berücksichtigung der Krümmung k und d der Abstand zwischen dem zu regelnden Fahrzeug und dem gemessenen vorausfahrenden Fahrzeug sind.

Ist dieser Kursversatz yc betragsmäßig kleiner als eine vorbestimmte Breite $y_{lane}$, dann kann darauf geschlossen werden, daß das Objekt oder das Fahrzeug sich im Fahrkorridor des ACC-Fahrzeugs befindet, wobei $y_{lane}$ etwa einer halben Fahrspurbreite entspricht.

Als Hinweis auf eine künftige Änderung der Krümmung kann eine kollektive Verschiebung der Radarziele herangezogen werden. Solange davon ausgegangen werden kann, dass vorausfahrende Fahrzeuge ihre Spur beibehalten, zeigt deren Bewegung schon frühzeitig an, daß eine Krümmungsänderung erfolgt. Mit der Erfindung wird somit aus der Detektion einer Mehrzahl von Objekten eine Korrektur der Krümmung der eigenen Fahrtrajektorie im Hinblick auf eine Prädiktion einer zu erwartenden Krümmung durchgeführt, wobei hier eine Mittelung der an der Mehrzahl der Objekte ermittelten Positionsänderungen zugrunde gelegt wird.

Bei einer besonders bevorzugten Ausführungsform wird in vorteilhafter Weise die korrigierte Krümmung k für die Mehrzahl der detektierten Objekte in vorgegebenen Zeitabständen der dem Querversatz |yv| entsprechende Winkel $\alpha_i$ gemessen. Für jedes Objekt wird die Winkeländerung d$\alpha_i$ von einer Messung zur jeweils vorhergehenden Messung ermittelt und in jedem Messzykluss die Winkeländerungen d$\alpha_i$ über das Kollektiv der erfassten Objekte gemittelt und durch die Zeitdauer zwischen den Messzyklen zur Bildung einer Kollektivwinkelgeschwindigkeit $\alpha Dt_{koll}$ geteilt. Aus der Addition der Kollektivwinkelgeschwindigkeit $\alpha Dt_{koll}$ zur im zu regelnden Fahrzeug gemessenen Gierrate wird dann eine Korrektur für eine zukünftige Krümmung k der Fahrtrajektorie des zu regelnden Fahrzeugs ermittelt.

Es ist auch vorteilhaft, wenn die zukünftige Krümmung k durch eine Division der Summe aus der Gierrate und der Kollektivwinkelgeschwindigkeit $\alpha Dt_{koll}$ durch die Fahrgeschwindigkeit des zu regelnden Fahrzeuges errechnet wird. Weiterhin kann auch auf einfache Weise die mit jedem Objekt gemessene Winkeländerung d$\alpha_i$ jeweils durch die Relativgeschwindigkeit des zu regelnden Fahrzeugs im Verhältnis zur Objektbewegung und die Gierrate korrigiert werden. Zur Verbesserung des Messergebnisses ist es auch möglich, dass bei der Ermittlung der Kollektivwinkelgeschwindigkeit $\alpha Dt_{koll}$ über mehrerer Messzyklen hinweg die jeweils ermittelten Werte gemittelt werden.

Um ein noch verbessertes Verfahren zur Prädiktion des Kursverlaufes des zu regelnden Fahrzeugs zu erhalten, ist es auch möglich, dass im zu regelnden Fahrzeug eine Anzahl weiterer Detektionseinrichtungen für die Bestimmung des Kursversatzes der voraus liegenden Objekte vorhanden sind. Alle Ergebnisse dieser Detektionseinrichtungen können dann ausgewertet und gewichtet werden. Die Auswertung und Gewichtung kann bevorzugt mittels einer Videokamera, einem vorzugsweise satellitengestützten Navigationssystem oder einer Anordnung zur Ermittlung eines historischen Lateralversatzes der vorausfahrenden Fahrzeuge oder mittels einer Kursbestimmung durch die Interpretation der Position von Standzielen ermittelten Kursversatzes durchgeführt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Zeichnung

Das erfindungsgemäße Verfahren zur Regelung der Geschwindigkeit eines Fahrzeuges unter Einbeziehung vorausfahrender Objekte wird anhand der Zeichnung erläutert.

Es zeigen:

Figur 1     eine Skizze eines gekrümmten Fahrbahnverlaufs mit einem in seiner Geschwindigkeit zu regelnden Fahrzeug und weiteren Objekten,

Figur 2     ein Prinzipschaltbild einer Berechnungsmethode für einen zukünftigen Kursverlauf des Fahrzeugs, bzw. der Korrektur der Krümmung der Fahrtrajektorie, unter Einbeziehung einer Umgebungsgierrate mehrere Objekte,

Figur 3     ein Diagramm zur Begrenzung der Krümmungskorrektur und

Figur 4     ein Blockschaltbild betreffend die Auswertung und Gewichtung bei der Krümmungskorrektur mit mehrere Detektionsmethoden.

Beschreibung des Ausführungsbeispiels

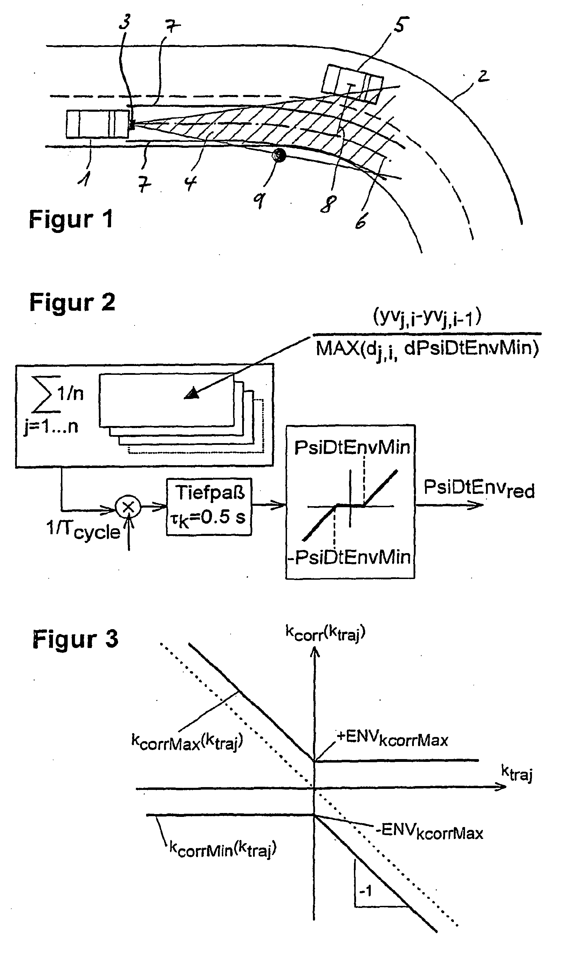

In Figur 1 ist ein zu regelndes ACC-Fahrzeug 1 gezeigt, dass sich auf einer Fahrbahn 2 mit mehreren Fahrspuren befindet. Das Fahrzeug 1 weist z.B. einen Radarsensor 3 mit einem Radardetektionsbereich 4 auf; am Fahrzeug 1 sind auch noch weitere Detektionsanordnungen anbringbar, wie z.B. Video- oder Navigationseinrichtungen, mit denen die Fahrbahn 2 oder das Fahrbahnumfeld erfasst werden kann. Auf der Fahrbahn 2 befindet sich ein Fahrzeug 5 als ein vorausfahrendes Objekt, wobei in der Realität eine Mehrzahl solcher Objekte in verschiedenen Abständen und unterschiedlichen Geschwindigkeiten vorhanden sind.

Das ACC-System im Fahrzeug 1 beinhaltet eine hier nicht näher erläuterte Regelanordnung zur Beeinflussung der Geschwindigkeit und eine Vielzahl von Sensoren, wie z.B. einen Gier- oder Drehratensensor, einen Lenkwinkelsensor, Raddrehzahlsensoren oder einen Querbeschleunigungssensor. Eine strichpunktierte Linie 6 stellt den zukünftigen gewollten Kursverlauf, bzw. die Fahrtrajektorie des Fahrzeugs 1 dar und die beiden Linien 7 zeigen den zukünftigen Kursbereich bzw. Fahrkorridor. Mit einer Strecke 8 ist der seitliche Quer- oder Kursversatz des vorausfahrenden Fahrzeugs 5 zum Fahrverlauf des Fahrzeugs 1 angegeben. Als feststehendes Objekt ist hier ein Baum 9 eingezeichnet, wobei allerdings vor der Kurveneinfahrt keine kollektive Gierrate für solche Standziele vorhanden ist.

Im folgenden soll mit Bezug auf Figur 2, 3 und 4 davon ausgegangen werden, dass zusätzlich zum Fahrzeug 5 nach der Figur 1 noch eine Anzahl i von weiteren, in der Figur 1 nicht gezeigten, vorausfahrenden oder -liegenden Objekten im Verlauf der Fahrbahn 2 oder im Detektionsbereich 4 erfasst und ausgewertet werden. Mit dem Ausführungsbeispiel der Erfindung wird somit aus der Detektion einer Mehrzahl von Objekten i eine Korrektur der Krümmung der eigenen Fahrtrajektorie 6 des ACC-Fahrzeugs 1 im Hinblick auf eine Prädiktion einer zu erwartenden Krümmung der Fahrbahn 2 durchgeführt, wobei hier nach dem Funktionsbild aus der Figur 2 eine Mittelung der an der Mehrzahl der Objekte i ermittelten Positionsänderungen durchgeführt wird.

Symbolisch ist in einem Block 20 in der Figur 2 gezeigt, dass eine Korrektur der Krümmung k der Fahrtrajektorie 6 für die detektierten Objekte i in vorgegebenen Zeitabständen vorgenommen wird. Für jedes Objekt i wird die Winkeländerung $d\alpha_i$ des Kursversatzes von einer Messung zur jeweils vorhergehenden Messung ermittelt und in jedem Messzyklus die Winkeländerungen $d\alpha i$ über das Kollektiv der erfassten Objekte gemittelt und durch die Zeitdauer zwischen den Messzyklen zur Bildung einer Kollektivwinkelgeschwindigkeit $\alpha Dt_{koll}$ geteilt. Aus der Addition der Kollektivwinkelgeschwindigkeit $\alpha Dt_{koll}$ zur im zu regelnden Fahrzeug 1 gemessenen Gierrate wird dann eine Korrektur für eine zukünftige Krümmung k der Fahrtrajektorie 6 des zu regelnden Fahrzeugs 1 ermittelt.

Es ist hier auch möglich, dass die zukünftige Krümmung k durch eine Division der Summe aus der Gierrate und der Kollektivwinkelgeschwindigkeit $\alpha Dt_{koll}$ durch die Fahrgeschwindigkeit des zu regelnden Fahrzeuges 1 errechnet wird. Weiterhin kann auch die mit jedem Objekt i gemessene Winkeländerung $d\alpha_i$ jeweils einerseits durch die Relativgeschwindigkeit des zu regelnden Fahrzeugs 1 im Verhältnis zur Objektbewegung und andererseits durch die Gierrate korrigiert werden. Zur Verbesserung des Messergebnisses werden mit dem in der Figur 2 dargestellten Tiefpass 21 bei der Ermittlung der Kollektivwinkelgeschwindigkeit $\alpha Dt_{koll}$ über mehrerer Messzyklen hinweg die jeweils ermittelten Werte gemittelt.

Nachfolgend soll eine Berechnungsmethode beschrieben werden mit der die zuvor beschriebene Berechnung des Kursversatzes zur Kursprädiktion unter Berücksichtigung der kollektiven Umgebungsgierrate der Objekte i durchgeführt werden kann. Die gewählten Abkürzungen stellen die für die Eingabe in ein Datenverarbeitungssystem gängigen Kurzformen der entsprechend physikalischen Größen dar.

Für die Berechnung wird zu der gefilterten Trajektorienkrümmung $K_{Traj}$ des zu regelnden Fahrzeugs 1 ein Anteil hinzuaddiert, der sich, wie oben erwähnt, aus der kollektiven Winkeländerung der Radarobjekte i ergibt. Diese Winkelgeschwindigkeit wird hier als Umgebungsgierrate PsiDtEnv bezeichnet. Die Gierrate PsiDt als Drehung des Fahrzeugs l um die Hochachse beschreibt die aktuelle Krümmung k der Fahrtrajektorie 6 nach der Figur 1. Es ergibt sich folgende Beziehung ($v_{Veh}$ = Geschwindigkeit des zu regelnden Fahrzeugs in Längsrichtung):

$$K = PsiDt/v_{Veh}.$$

Das entsprechende Steuergerät im Fahrzeug 1 stellt eine offsetkorrigierte Gierrate zur Verfügung, bei der eventuell Gierratenoffsets eliminiert werden unter Berücksichtigung der Signale eines Lenkradwinkelsensors, eines Querbeschleunigungssensors, eines Raddrehzahlfühlers und eines Drehratensensors. Dabei werden die Abweichungen der Einzelsignale auf Plausibilität geprüft und bei zu großen Abweichungen als Ausfall eines Sensors erkannt. Die Trajektorienkrümmung $k_{Traj}$ kann z.B. über eine einfache Tiefpassfilterung gebildet werden ($T_{cycle}$=Zykluszeit des Reglers, $\tau_{Kap}$=Zeitkonstante des Reglers) :

$$k_{Traj}(t_j) = (T_{cycle}/\tau_{Kap}) * (k(t_j) - k_{Traj}(t_{j-1})).$$

Die Umgebungsgierrate PsiDtEnv wird durch die virtuelle Winkelgeschwindigkeit der Radarobjekte i bestimmt. Diese Größe ermöglicht auf der einen Seite eine Vorhersage der Krümmungsänderung und auf der anderen Seite eine Kompensation bei eigenen Spurwechseln des ACC-Fahrzeugs 1. Die Umgebungsgierrate bildet sich aus der Ensemblemitteilung der Winkeländerung PsiDeltaSum unter Berücksichtigung eines Relativgeschwindigkeits- und Gierratenunabhängigen Kompensationsterms und einer nachfolgenden Tiefpassfilterung mit der Zeitkonstanten $\tau_{Kap}$, die auch für die Tiefpassfilterung der Trajektorienkrümmung $k_{Traj}$ verwendet wird. Es ergibt sich somit unter Einschränkung auf Objekte mit gleicher Geschwindigkeit oder andernfalls mit einer Korrektur mit $v_r$ (Geschwindigkeit der Zielobjekte) und PsiDt proportionalen Korrekturen:

PsiDeltaSum $(t_j) = \Sigma[(yv_i(t_j) - yv_i(t_{j-1}) - (v_r$ PsiDt dt $d/v_{veh})) /$ MAX $(dPsiDtEnvMin, d_i(t_j))]$, für i=1... n bei n≥1 gültigen Zielobjekten, sonst der Wert 0.

Die kollektive Gierrate ergibt sich zu:

$$\text{PsiDtEnv}(t_j) = (\text{PsiDeltaSum}(t_j) \: / \: \text{MAX} \: (1,n) - T_{cycle} * \text{PsiDtEnv}(t_{j-1})) / \: \tau_{Kap}.$$

Zur Reduktion von Rauscheffekten wird die Umgebungsgierrate betragsmäßig um einen kleinen Wert reduziert:

$$\text{PsiDtEnv}_{red}(t_j) = \text{SIGN}(\text{PsiDtEnv}(t_j)) *$$
$$\text{MAX} \: (0, |\text{PsiDtEnv}(t_j)| - \text{PsiDtEnvMin}).$$

Aus der Figur 3 ist eine Diagramm zu entnehmen, das einen Zusammenhang zwischen der Krümmung $k_{Traj}$ der Trajektorie 6 des zu regelnden Fahrzeugs 1 und einer Korrekturkrümmung $k_{Corr}$ zeigt. Die Berechnung des zukünftigen Kurses beschränkt sich dabei auf die Bestimmung des zweiten Koeffizienten entsprechend einer konstant angenommenen Parabelkrümmung. Diese Krümmung wird dann aus der Summe der Trajektorienkrümmung $k_{Traj}$ und der Korrekturkrümmung $k_{Corr}$ gebildet, die wiederum aus der Umgebungsgierrate, wie weiter oben beschrieben, gebildet wird. Dabei berücksichtigen die Grenzen für $k_{Corr}$ sowohl den Spurwechsel als auch eine mögliche Voreilung des Fahrzeugs 1 beim Kurvenanfang.

$$k_{Corr} = \text{MIN}(-k_{Traj} \: / \: 2 + |k_{Traj}| \: / \: 2 + k_{CorrMax}, \text{MAX}(-k_{Traj}$$
$$/ \: 2 - |k_{Traj}| \: / \: 2 - k_{CorrMax}, \text{PsiDtEnv}/v_{veh})) \text{ und}$$
$$k_{Course}(t_j) = k_{Traj}(t_j) + k_{Corr}.$$

Neben der Berechnung der Kurskrümmung selbst wird auch eine Kursqualität in Form eines Wertes $k_{error}$ berechnet, der für die Berechnung einer sog. Spurwahrscheinlichkeit benötigt wird. Dabei wird $k_{error}$ als eine Kombination von einem relativen Fehler (RelKapErr), einem minimalen absoluten Fehler (KapErrMin) bei niedrigen Geschwindigkeiten und aus einem Fehler der Gierrate (PsiDtError) wie folgt angesetzt:

$$k_{error} = \text{MAX}(\text{RelKapErr} * |k_{Course}|,$$
$$\text{MIN}(\text{KapErrMin}, \text{PsiDtError}/\text{MAX}(v_{Veh}, \: v_{Veh}/v_{Min}))).$$

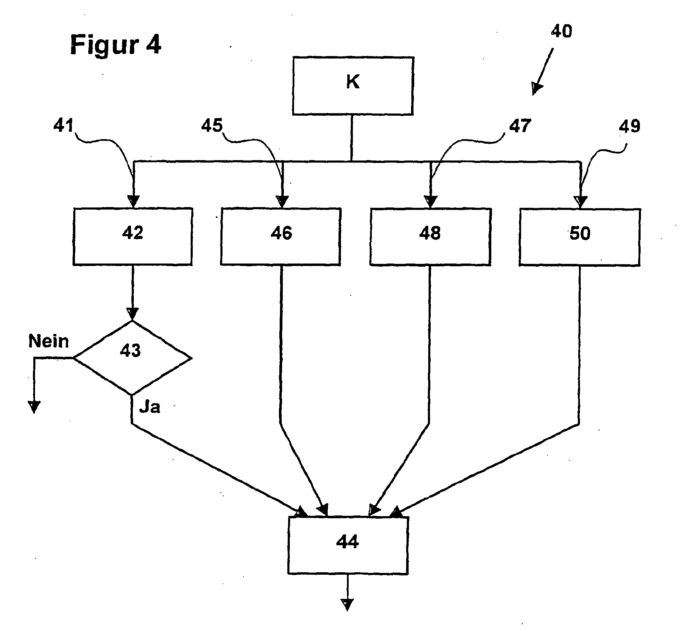

In Figur 4 ist ein Blockschaltbild 40 gezeigt, dass verschiedene Möglichkeiten zur Erfassung und Auswertung von Objekten im Kursverlauf k eines ACC-Fahrzeugs zeigt, die auch in unterschiedlichen Kombinationen, einzeln oder zusammen angewandt werden können. Im linken Zweig 41 ist die zuvor näher beschriebene Berechnung eines zukünftigen Kursverlaufs durch Addition der eigenen Trajektorie aus der eigenen Gierrate mit einer kollektiven Gierrate in einem Block 42 dargestellt. In einem Block 43 kann nun unter Hinzuziehung der aktuellen Objektdaten eine Entscheidung darüber gefällt werden, ob ein detektiertes Fahrzeug sich im eigenen berechneten Fahrkorridor befindet und folglich als ein Objekt an das die eigene Geschwindigkeit angepasst werden soll in Frage kommt. Falls dies bejaht wird kann dann in einer Regelanordnung 44 die eigentliche Regelung durchgeführt.

In einem parallelen Zweig 45 soll hier ein Videosystem 46 vorhanden sein, mit dem ebenfalls eine Definition des eigenen Fahrkorridors und eine Erfassung eines vorausfahrenden Objekts als Regelobjekt erfolgen kann. In einem weiteren Zweig 47 ist weiterhin ein Navigationssystem 48 vorhanden, dass mit Kenntnis des eigenen Standortes und unter Berücksichtigung von vorhandenem Kartenmaterial die gleichen Regelmechanismen wie zuvor beschrieben bewirken kann.

Mit einem weiteren Zweig 49 kann in einem Baustein 50 eine Kursprädiktion des ACC-Fahrzeugs 1 vorgenommen werden, die bei der Berechnung einen historischen Lateralversatz zwischen dem ACC-Fahrzeug 1 und einem erfassten Objekt i berücksichtigt.

In einem anderen parallelen Zweig 51 kann hier noch in einem Baustein 52 eine Kursbestimmung mittels eines durch die Interpretation der Position von Standzielen, beispielsweise am Fahrbahnrand, ermittelten Kursversatzes durchgeführt werden.

In der eigentlichen Regelanordnung 44 kann nun unter Auswertung der Ergebnisse aus den Berechnungen der einzelnen Zweige 41, 45, 47, 49 und 51 eine endgültige Entscheidung über die Auswahl des vorausfahrenden Fahrzeugs gewählt werden, ggf. mit einer Gewichtung der Einzelergebnisse, an das das ACC-Fahrzeug seine Geschwindigkeit anpasst.

**Patentansprüche**

1.  Verfahren zur Regelung der Geschwindigkeit eines Fahrzeuges (1), bei dem

    - im zu regelnden Fahrzeug die Gier- oder Drehrate zur Ermittlung der Krümmung (k) der eigenen Fahrtrajektorie erfasst wird und
    - bei dem mit einem Abstands- oder Positionssensor (6) mindestens ein vorausfahrendes Fahrzeug (5) oder mindestens ein sonstiges Objekt innerhalb eines Sensorerfassungsbereichs (7) detektiert wird, insbesondere hinsichtlich eines Versatzes vom Kurs des zu regelnden Fahrzeugs,
    **dadurch gekennzeichnet, dass**
    - aus der Detektion einer Mehrzahl von Objekten (i) eine Korrektur der Krümmung (k) der eigenen Fahrtrajektorie im Hinblick auf eine Prädiktion einer zu erwartenden Krümmung aus der Mittelung ($k_i$) der an der Mehrzahl der Objekte ermittelten Positionsänderungen durchgeführt wird.

2.  Verfahren nach Anspruch 1, **dadurch gekennzeichnet, dass**

    - die korrigierte Krümmung (k) für die Mehrzahl der detektierten Objekte (i) in vorgegebenen Zeitabständen der dem Lateralversatz entsprechende Winkel ($\alpha_i$) gemessen wird,
    - für jedes Objekt (i)die Winkeländerung ($d\alpha_i$) von einer Messung zur jeweils vorhergehenden Messung ermittelt wird,
    - in jedem Messzyklus die Winkeländerungen ($d\alpha_i$) über das Kollektiv der erfassten Objekte (i) gemittelt und durch die Zeitdauer zwischen den Messzyklen zur Bildung einer Kollektivwinkelgeschwindigkeit ($\alpha Dt_{koll}$) geteilt wird und dass aus der Addition der Kollektivwinkelgeschwindigkeit ($\alpha Dt_{koll}$) zur im zu regelnden Fahrzeug (1) gemessenen Gierrate eine Korrektur für eine zukünftige Krümmung (k) der Fahrtrajektorie des zu regelnden Fahrzeugs (1) ermittelt wird.

3.  Verfahren nach Anspruch 2, **dadurch gekennzeichnet, dass** die zukünftige Krümmung (k) durch eine Division der Summe aus der Gierrate und der Kollektivwinkelgeschwindigkeit ($\alpha Dt_{koll}$) durch die Fahrgeschwindigkeit des zu regelnden Fahrzeuges (1) errechnet wird.

4.  Verfahren nach Anspruch 2 oder 3, **dadurch gekennzeichnet, dass** die mit jedem Objekt (i) gemessen Winkeländerung ($d\alpha_i$) jeweils durch die Relativgeschwindigkeit des zu regelnden Fahrzeugs (1) zur Objektbewegung und die Gierrate korrigiert werden.

5.  Verfahren nach Anspruch 2 oder 3, **dadurch gekennzeichnet, dass** bei der Ermittlung der Kollektivwinkelgeschwindigkeit ($\alpha dt_{koll}$) über mehrerer Messzyklen hinweg die jeweils ermittelten Werte gemittelt werden.

6.  Verfahren nach einem der vorhergehenden Ansprüche, **dadurch gekennzeichnet, dass** im zu regelnden Fahrzeug (1) eine schnelle Krümmung der Fahrtrajektorie ($k_{Traj}$) aus der Differenz der aktuelle gefilterten Krümmung der Fahrtrajektorie ($k_{Traj}$) und einer ungefilterten Krümmung der Fahrtrajektorie unter Berücksichtigung eines Rauschunterdrückungsparameters gebildet wird.

7.  Verfahren nach einem der vorhergehenden Ansprüche, **dadurch gekennzeichnet, dass** im zu regelnden Fahrzeug (1) eine Korrekturkrümmung ($k_{Corr}$) auf eine berechnete Krümmung der Fahrtrajektorie ($k_{Traj}$) addiert wird.

**8.** Verfahren nach einem der vorhergehenden Ansprüche, **dadurch gekennzeichnet, dass** im zu regelnden Fahrzeug (1) neben der Krümmung der Fahrtrajektorie ($k_{Traj}$) eine Kursqualität ($k_{error}$) berechnet wird, die eine Kombination von einem relativen Fehler, einem minimalen absoluten Fehler bei niedrigen Geschwindigkeiten und aus einem Fehler der Gierrate darstellt und für die Berechnung einer Spurwahrscheinlichkeit des zu regelnden Fahrzeuges (1) herangezogen wird.

**9.** Verfahren nach einem der vorhergehenden Ansprüche, **dadurch gekennzeichnet, dass** im zu regelnden Fahrzeug (1) eine Anzahl weiterer Detektionseinrichtung (41,45,47,49,51) zur Erfassung der Position der vorausfahrenden Objekte (5) vorhanden sind und dass zur Auswahl eines vorausfahrenden Objekts (5) als das Fahrzeug, an das die Geschwindigkeit des zu regelnden Fahrzeugs angepasst werden soll, alle Ergebnisse dieser Detektionseinrichtungen (41,45,47,49,51) ausgewertet und gewichtet werden.

**10.** Verfahren nach Anspruch 9, **dadurch gekennzeichnet, dass** die Auswertung und Gewichtung mit einer Videokamera, einem vorzugsweise satellitengestützten Navigationssystem, einer Anordnung zur Auswertung von Standzielen oder einer Anordnung zur Ermittlung eines historischen Lateralversatzes von vorausfahrenden Objekten (5) durchgeführt wird.

**Claims**

**1.** Method for controlling the speed of a vehicle (1), in the case of which

- the yawing rate or rotational speed is acquired in the vehicle to be controlled in order to determine the curvature (k) of the intrinsic driving trajectory, and
- in the case of which a distance or position sensor (6) is used to detect at least one vehicle (5) travelling in front or at least one other object within a sensor acquisition range (7), in particular with regard to an offset from the course of the vehicle to be controlled,
  **characterized in that**
- the detection of a plurality of objects (i) is used to carry out a correction of the curvature (k) of the intrinsic driving trajectory with regard to prediction of a curvature to be expected from the averaging ($k_i$) of the positional changes determined by the plurality of the objects.

**2.** Method according to Claim 1, **characterized in that**

- the corrected curvature (k) for the plurality of the detected objects (i) is measured in prescribed time intervals of the angle ($\alpha_i$) corresponding to the lateral offset,
- the angular change ($d\alpha_i$) for a measurement relative to the respectively preceding measurement being determined for each object (i),
- the angular changes ($d\alpha_i$) being averaged in each measurement cycle over the aggregate of the acquired objects (i) and being divided by the time period between the measurement cycles in order to form an aggregate angular velocity ($\alpha Dt_{koll}$), and **in that** a correction for a future curvature (k) of the driving trajectory of the vehicle (1) to be controlled is determined from adding the aggregate angular velocity ($\alpha Dt_{koll}$) to the yawing rate measured in the vehicle (1) to be controlled.

**3.** Method according to Claim 2, **characterized in that** the future curvature (k) is calculated by dividing the sum of the yawing rate and the aggregate angular velocity ($\alpha Dt_{koll}$) by the travelling speed of the vehicle (1) to be controlled.

**4.** Method according to Claim 2 or 3, **characterized in that** the angular change ($d\alpha_i$) measured with each object (i) is corrected in each case by the relative speed of the vehicle (1) to be controlled in relation to the object movement, and by the yawing rate.

**5.** Method according to Claim 2 or 3, **characterized in that** the respectively determined values are averaged over a number of measurement cycles when determining the aggregate angular velocity ($\alpha Dt_{koll}$).

**6.** Method according to one of the preceding claims, **characterized in that** a rapid curvature of the driving trajectory ($k_{Traj}$) is formed in the vehicle (1) to be controlled from the difference between the currently filtered curvature of the driving trajectory ($k_{Traj}$) and an unfiltered curvature of the driving trajectory by taking account of a noise suppression parameter.

**7.** Method according to one of the preceding claims, **characterized in that** a correction curvature ($k_{Corr}$) is added in the vehicle (1) to be controlled to a calculated curvature of the driving trajectory ($k_{Traj}$).

**8.** Method according to one of the preceding claims, **characterized in that** calculated in addition to the curvature of the driving trajectory ($k_{Traj}$) in the vehicle (1) to be controlled is a course quality ($k_{error}$) which constitutes a combination of a relative error, a minimum absolute error in the case of low speeds, and an error in the yawing rate, and is used to calculate a path likelihood of the vehicle (1) to be controlled.

**9.** Method according to one of the preceding claims, **characterized in that** a number of further detection devices (41, 45, 47, 49, 51) for acquiring the position of the objects (5) travelling in front are present in the vehicle (1) to be controlled, and **in that** all the results of these detection devices (41, 45, 47, 49, 51) are evaluated and weighted in order to select an object (5) travelling in front as the vehicle to which the speed of the vehicle to be controlled is to be matched.

**10.** Method according to Claim 9, **characterized in that** the evaluation and weighting are carried out with the aid of a video camera, a preferably satellite based navigation system, an arrangement for evaluating stationary targets, or an arrangement for determining a historical lateral offset of objects (5) travelling in front.

**Revendications**

**1.** Procédé de régulation de la vitesse d'un véhicule (1), selon lequel

- on saisit la vitesse de lacet ou vitesse de rotation du véhicule à réguler, pour déterminer la courbure (k) de la trajectoire de déplacement propre et
- à l'aide d'un capteur de distance ou de position (6) on détecte au moins un véhicule (5) qui précède ou au moins un autre objet dans une plage de saisie (7) du capteur, notamment concernant un décalage de la trajectoire du véhicule à réguler,
**caractérisé en ce qu'**
- à partir de la détection de plusieurs objets (i) on effectue une correction de la courbure (k) de la trajectoire de déplacement propre du point de vue de la prévision d'une courbure prévisible à partir de la moyenne ($k_i$) des variations de position déterminées sur l'ensemble des objets.

**2.** Procédé selon la revendication 1,
**caractérisé en ce qu'**

- on mesure la courbure corrigée (k) pour l'ensemble des objets détectés (i) à des intervalles de temps prédéfinis de l'angle ($\alpha_i$) correspondant au décalage latéral,
- on détermine pour chaque objet (i) la variation angulaire ($d\alpha_i$) d'une mesure, par rapport à la mesure précédente respective,
- dans chaque cycle de mesure on fait la moyenne des variations angulaires ($d\alpha_i$) en fonction de l'ensemble des objets saisis (i) et on divise par la durée entre les cycles de mesure, pour former une vitesse angulaire collective ($\alpha Dt_{koll}$), et **en ce qu'** à partir de l'addition de la vitesse angulaire collective ($\alpha Dt_{koll}$) par rapport à la vitesse de lacet mesurée dans le véhicule (1) à réguler, on détermine une correction pour une courbure future (k) de la trajectoire de déplacement du véhicule (1) à réguler.

**3.** Procédé selon la revendication 2,
**caractérisé en ce qu'**
on calcule la courbure future (k) par une division de la somme de la vitesse de lacet et de la vitesse angulaire collective ($\alpha Dt_{koll}$) par la vitesse de déplacement du véhicule (1) à réguler.

**4.** Procédé selon la revendication 2 ou 3,
**caractérisé en ce qu'**
on corrige la variation angulaire ($d\alpha_i$) mesurée pour chaque objet (i), chaque fois par la vitesse relative du véhicule (1) à réguler par rapport au mouvement de l'objet et à la vitesse de lacet.

**5.** Procédé selon la revendication 2 ou 3,
**caractérisé en ce que**

pour déterminer la vitesse angulaire collective ($\alpha Dt_{koll}$) sur plusieurs cycles de mesure on fait la moyenne de chacune des valeurs obtenues.

6. Procédé selon l'une des revendications précédentes,
   **caractérisé en ce que**
   dans le véhicule (1) à réguler on forme une courbure rapide de la trajectoire de déplacement ($k_{Traj}$) de la différence de la courbure actuelle filtrée de la trajectoire de déplacement ($k_{Traj}$) et d'une courbure non filtrée de la trajectoire de déplacement en tenant compte d'un paramètre de suppression de bruit.

7. Procédé selon l'une des revendications précédentes,
   **caractérisé en ce que**
   dans le véhicule (1) à réguler on additionne une courbure de correction ($k_{Corr}$) à une courbure calculée de la trajectoire de déplacement ($k_{Traj}$).

8. Procédé selon l'une des revendications précédentes,
   **caractérisé en ce que**
   dans le véhicule (1) à réguler, on calcule en plus de la courbure de la trajectoire de déplacement ($k_{Traj}$), une qualité de course ($k_{error}$) qui représente une combinaison d'une erreur relative, d'une erreur absolue minimale aux faibles vitesses et d'une erreur de la vitesse de lacet et que l'on utilise pour calculer une probabilité de trace pour le véhicule (1) à réguler.

9. Procédé selon l'une des revendications précédentes,
   **caractérisé en ce que**
   le véhicule (1) à réguler a un nombre d'autres installations de détection (41, 45, 47, 49, 51) pour saisir la position des objets (5) qui précèdent et **en ce qu'**on évalue et on pondère tous les résultats de ces installations de détection (41, 45, 47, 49, 51) pour sélectionner un objet (5) qui précède, comme véhicule sur lequel on veut adapter la vitesse du véhicule à réguler.

10. Procédé selon la revendication 9,
    **caractérisé en ce qu'**
    on effectue l'évaluation et la pondération à l'aide d'une caméra vidéo, d'un système de navigation, de préférence assisté par satellite, d'un montage pour évaluer les cibles fixes ou d'un montage pour déterminer un décalage latéral historique d'objets qui précèdent (5).

## Figur 1

## Figur 2

$$\frac{(yv_{j,i} - yv_{j,i-1})}{MAX(d_{j,i},\ dPsiDtEnvMin)}$$

$\sum_{j=1...n} 1/n$

$1/T_{cycle}$

Tiefpaß $\tau_K = 0.5\ s$

PsiDtEnvMin

-PsiDtEnvMin

PsiDtEnv$_{red}$

## Figur 3

$k_{corr}(k_{traj})$

$k_{corrMax}(k_{traj})$

$+ENV_{kcorrMax}$

$k_{traj}$

$-ENV_{kcorrMax}$

$k_{corrMin}(k_{traj})$

$-1$

**Figur 4**

40

K

41      45      47      49

42      46      48      50

Nein    43

Ja

44

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4242700 A1
- DE 19722947 C1
- EP 0775919 A2